# EUROPÄISCHE PATENTANMELDUNG

(11) **EP 4 782 875 A1**
(43) Veröffentlichungstag der Anmeldung: **29.07.2026**
(21) Anmeldenummer: 25153863.3
(22) Anmeldetag: 24.01.2025
(51) Int. Cl.: G01S 7/48, G01S 7/487, G01S 17/10, G01S 17/42

(54) **VERFAHREN ZUM ERSTELLEN EINER 3D-PUNKTWOLKE**

(71) Anmelder: RIEGL Laser Measurement Systems GmbH, 3580 Horn (AT)
(72) Erfinder: ULLRICH, Andreas, 3003 Gablitz (AT); RIEGER, Peter, 3824 Grossau (AT); PFENNIGBAUER, Martin, 3430 Tulln (AT)
(74) Vertreter: Weiser Voith Gugler Patentanwälte Partnerschaft

(57) **Zusammenfassung**

Ein Verfahren (1) zum Erstellen einer 3D-Punktwolke (W) umfasst: Zuordnen (8) von Empfangspulsen (5ⱼ) zu Sendepulsen (4ᵢ) anhand einer Ähnlichkeit der Variation von Empfangszeitpunkte (t_{E,j}) zur Variation von Sendezeitpunkten (t_{s,i}) und Bestimmen (9) sicherer und unsicherer Empfangspulse (5_{j,s}, 5_{j,u}) , welche mit höherer bzw. geringerer Sicherheit dem dafür ursächlichen Sendepuls zugeordnet sind; Aufstellen (10) eines Abtastpunkts (Aⱼ) in der 3D-Punktwolke (W) für jeden sicheren Empfangspuls; Aufstellen (11) mehrerer Kandidatenabtastpunkte (A'_{j,i}) in der 3D-Punktwolke (W) für jeden unsicheren Empfangspuls; für jeden unsicheren Empfangspuls, Berechnen (12) einer Abtastpunktedichte (D_{j,i}) an jedem seiner Kandidatenabtastpunkte, und Entfernen (13) jener seiner Kandidatenabtastpunkte aus der 3D-Punktwolke, deren berechnete Abtastpunktedichte geringer ist als die an seinen Kandidatenabtastpunkten größte berechnete lokale Abtastpunktedichte. Eine Vorrichtung (16), ein Computerprogramm, und ein computerlesbares Medium (17) basieren auf dem Verfahren (1).

## Beschreibung

Die vorliegende Erfindung betrifft ein Verfahren zum Erstellen einer 3D-Punktwolke von Abtastpunkten, welche eine Umgebung abbildet, aus einer Sendepulsfolge mit jeweiligen Sendezeitpunkten, Sendeorten und Senderichtungen von auf die Umgebung ausgesandten Sendepulsen, und einer Empfangspulsfolge mit jeweiligen Empfangszeitpunkten von an der Umgebung reflektierten Empfangspulsen. Die vorliegende Erfindung betrifft ferner eine Vorrichtung zur Datenverarbeitung, umfassend Mittel zur Ausführung des genannten Verfahrens; ein Computerprogramm, umfassend Befehle, die bei der Ausführung des Computerprogramms durch einen Computer diesen veranlassen, das genannte Verfahren auszuführen; und ein computerlesbares Medium, umfassend Befehle, die bei der Ausführung durch einen Computer diesen veranlassen, das genannte Verfahren auszuführen.

Derartige Verfahren werden beim Laserscannen von Umgebungen wie dem Erdboden, dem Meeresgrund, einer Stadt, Straßenverkehr, Hausfassaden, Tag- oder Untertagbergwerke, usw. verwendet, um aus den von einem Laserscanner erzeugten Sende- und Empfangspulsfolgen eine 3D-Punktwolke zu erstellen. Vom Laserscanner werden dazu Sendepulse unter verschiedenen Senderichtungen auf die Umgebung ausgesandt, beispielsweise durch Auffächern zu einem oder mehreren Scanfächern um jeweils eine Fächerachse, wobei die Scanfächer die Umgebung durch entsprechende Bewegung in aufeinanderfolgenden Scanzeilen zeilenweise abtasten. Die Sendepulse werden an der Umgebung reflektiert und als umgebungsreflektierte Empfangspulse empfangen. Aus Laufzeitmessungen der Sende- und zugehörigen Empfangspulse werden die Entfernungen zwischen den jeweiligen Sendeorten und der Umgebung und daraus - in Kenntnis der jeweiligen Sendeorte und Senderichtungen - die Abtastpunkte der 3D-Punktwolke in einem Koordinatensystem aufgestellt.

Dabei ist eine möglichst rasche, genaue und hochaufgelöste Erstellung der 3D-Punktwolke wünschenswert. Die Auflösung der 3D-Punktwolke hängt von der Sendepulsrate und der Änderung der Senderichtungen und -orte mit der Zeit ab. Bei hoher Sendepulsrate oder größerer Entfernung zur Umgebung wird bereits der nächste Sendepuls ausgesandt, noch bevor der reflektierte Empfangspuls zum vorherigen Sendepuls empfangen wurde, sodass die eintreffenden Empfangspulse ihrem jeweiligen Sendepuls nicht mehr unmittelbar zugeordnet werden können. Dies ist als "multiple time around"-(MTA-)-Problem bekannt. Die maximale Größe dₘₐₓ eines eindeutig vermessbaren Entfernungsbereiches, einer sog. MTA-Zone, ergibt sich dabei aus der Sendepulsrate (pulse repetition rate) PRR und der Lichtgeschwindigkeit c zu dₘₐₓ = c/(2·PRR). Die Zuordnung wird weiter erschwert, wenn ein Sendepuls an mehreren Punkten und/oder am Rand einer MTA-Zonengrenze an der Umgebung reflektiert wird.

Aus dem Stand der Technik sind mehrere Ansätze zur Lösung des MTA-Problems bekannt. Beispielsweise ist in den Schriften WO 2012/135874 A1 und EP 2 889 642 B1 beschrieben, die Sendezeitpunkte in der Sendepulsfolge entsprechend einer Pulspositionsmodulation zu variieren und die Empfangspulse in der Empfangspulsfolge den Sendepulsen in der Sendepulsfolge anhand einer Ähnlichkeit der Variation der Empfangszeitpunkte zur Variation der Sendezeitpunkte gemäß der Pulspositionsmodulation zuzuordnen. Dennoch können in dem Verfahren gemäß dem Stand der Technik einzelne Empfangspulse nicht korrekt zugeordnet werden, wodurch Abtastpunkte an falscher Stelle in der 3D-Punktwolke aufgestellt werden. Wenn sie in der 3D-Punktwolke nicht verbleiben können, müssen diese Abtastpunkte aufwändig manuell korrigiert bzw. gelöscht werden, z.B. in einer Bildschirmdarstellung der 3D-Punktwolke, wobei ein Korrigieren besonders aufwändig ist und sich im einfachen Fall der Löschung die Auflösung der 3D-Punktwolke naturgemäß unerwünscht verringert.

Die Erfindung setzt sich zum Ziel, ein Verfahren, eine Vorrichtung zur Datenverarbeitung, ein Computerprogramm und ein computerlesbares Medium zu schaffen, welche jeweils eine rasche und aussagekräftige Erstellung einer 3D-Punktwolke der Umgebung ermöglichen.

Dieses Ziel wird in einem ersten Aspekt der Erfindung mit einem Verfahren der eingangs genannten Art erreicht, bei welchem die Sendezeitpunkte in der Sendepulsfolge entsprechend einer Pulspositionsmodulation variiert sind, und welches umfasst:
Zuordnen der Empfangspulse in der Empfangspulsfolge zu den Sendepulsen in der Sendepulsfolge anhand einer Ähnlichkeit der Variation der Empfangszeitpunkte zur Variation der Sendezeitpunkte gemäß der Pulspositionsmodulation und Bestimmen sicherer Empfangspulse, welche mit höherer Sicherheit dem dafür ursächlichen Sendepuls zugeordnet sind, und unsicherer Empfangspulse, welche mit geringerer Sicherheit dem dafür ursächlichen Sendepuls zugeordnet sind;
Aufstellen eines Abtastpunkts in der 3D-Punktwolke für jeden sicheren Empfangspuls aus dem Empfangszeitpunkt des sicheren Empfangspulses und dem Sendezeitpunkt, dem Sendeort und der Senderichtung des zugeordneten Sendepulses;
Aufstellen mehrerer Kandidatenabtastpunkte in der 3D-Punktwolke für jeden unsicheren Empfangspuls aus dem Empfangszeitpunkt des unsicheren Empfangspulses und dem Sendezeitpunkt, dem Sendeort und der Senderichtung jeweils eines aufgrund seines zeitlichen Abstands zum unsicheren Empfangszeitpunkt möglicherweise ursächlichen Sendepulses;
für jeden unsicheren Empfangspuls, Berechnen einer lokalen Abtastpunktedichte in der 3D-Punktwolke an jedem seiner Kandidatenabtastpunkte, und Entfernen jener seiner Kandidatenabtastpunkte aus der 3D-Punktwolke, deren berechnete lokale Abtastpunktedichte geringer ist als die an seinen Kandidatenabtastpunkten größte berechnete lokale Abtastpunktedichte.

Das erfindungsgemäße Verfahren beruht auf einer zweistufigen Zuordnung der Empfangspulse zu den Sendepulsen, zunächst in der Zeit auf Basis der Empfangs- und Sendepulsfolgen anhand der Pulspositionsmodulation und dann im Raum auf Basis der 3D-Punktwolke anhand räumlicher Nachbarschaft.

Die Variation der Sendezeitpunkte entsprechend der Pulspositionsmodulation in der Zeit führt zu einer entsprechenden Variation der Kandidatenabtastpunkte jedes unsicheren Kandidatenabtastpunkts im Raum. Daher weisen alle Kandidatenabtastpunkte eines unsicheren Empfangspulses eine von der Pulspositionsmodulation vorgegebene Position auf. Dadurch liegen die "richtigen" Kandidatenpunkte mehrerer an demselben Ausschnitt der Umgebung reflektierter Empfangspulse - selbst wenn sie zeitlich weit auseinander liegen, z.B. weil die dafür ursächlichen Sendepulse in verschiedenen Durchläufen eines Scanfächers ausgesandt wurden - räumlich nahe beieinander und weisen eine hohe lokale Abtastpunktedichte auf. Unter einem "richtigen" Kandidatenabtastpunkt wird hierin jener Kandidatenabtastpunkt verstanden, der für den ursächlichen Sendepuls seines Empfangspulses aufgestellt wurde. Die anderen - im Nachhinein - "unrichtigen" Kandidatenpunkte dieser Empfangspulse liegen aufgrund der Pulspositionsmodulation räumlich weiter auseinander und weisen eine niedrigere lokale Abtastpunktedichte auf. Folglich können richtige Kandidatenabtastpunkte automatisch und rasch aufgrund der höheren Anzahl benachbarter Kandidatenabtastpunkte und/oder Abtastpunkte aufgefunden und die restlichen, nämlich die "unrichtigen", Kandidatenabtastpunkte entfernt werden, um eine genaue 3D-Punktwolke zu erhalten. Deshalb wird durch das erfindungsgemäße Verfahren eine rasche und aussagekräftige Erstellung der 3D-Punkwolke von Abtastpunkten in hoher Auflösung und ohne aufwändige manuelle Nachbearbeitung erzielt.

In einer vorteilhaften Variante wird im Schritt des Entfernens auch der Kandidatenabtastpunkt des jeweiligen Empfangspulses mit der größten berechneten lokalen Abtastpunktedichte aus der 3D-Punktwolke entfernt, wenn die berechnete lokale Abtastpunktedichte sich von den anderen berechneten lokalen Abtastpunktedichten um weniger als einen vorgegebenen Wert unterscheidet und/oder geringer ist als ein vorgegebener Schwellwert. Dadurch werden auch jene richtigen Kandidatenabtastpunkte entfernt, die sich lediglich durch eine geringfügig über den anderen liegende lokale Abtastpunktedichte auszeichnen, z.B. weil die Pulspositionsmodulation mehrerer an demselben Ausschnitt der Umgebung reflektierter unsicherer Empfangspulse zufällig ähnlich ist, und/oder wenn sie in einem dünn mit (Kandidaten-)Abtastpunkten besiedelten Gebiet liegen, etwa weil der unsichere Empfangspuls an einem kurzzeitig im Messbereich befindlichen Störobjekt reflektiert wurde. Dadurch werden intrinsisch unsichere Abtastpunkte überhaupt eliminiert, sodass zwar einerseits die Auflösung der 3D-Punktwolke geringfügig reduziert wird, ihre Aussagekraft jedoch gesteigert wird.

Die lokale Abtastpunktedichte kann auf viele Arten berechnet werden, z.B. durch Zählen der Abtastpunkte innerhalb eines den jeweiligen Kandidatenabtastpunkt umgebenden festen Volumens. Bevorzugt wird die lokale Abtastpunktedichte in der 3D-Punktwolke für jeden Kandidatenabtastpunkt anhand eines Volumens berechnet, das eine vorgegebene Anzahl an nächsten Abtastpunkten und Kandidatenabtastpunkten aufspannen. Die nächsten (Kandidaten-)Abtastpunkte und das zugehöriges Volumen können effizient ermittelt werden. Anhand des jeweils zugeordneten Volumens können richtige Kandidatenabtastpunkte scharf von unrichtigen getrennt werden.

In einer günstigen Ausführungsform werden weitere Sende- und Empfangspulsfolgen zum Erstellen der 3D-Punktwolke verwendet, wobei die Sendeorte jeder Sendepulsfolge entlang einer Bewegungstrajektorie angeordnet sind, die Senderichtungen in jeder Sendepulsfolge einen zur Bewegungstrajektorie nicht-parallelen jeweiligen Scanfächer durchlaufen, alle Scanfächer einander in Richtung der Bewegungstrajektorie gesehen zumindest teilweise überlappen und normal zur Bewegungstrajektorie in Richtung der Umgebung verschieden geneigt sind. In dieser Ausführungsform kann ein Ausschnitt der Umgebung von gleich mehreren Scanfächern unter verschiedenen Winkeln vermessen werden, wodurch die lokale (Kandidaten-)Abtastpunktedichte erhöht wird, insbesondere jene der richtigen Kandidatenabtastpunkte aufgrund der Pulspositionsmodulation überproportional mehr als jene der unrichtigen Kandidatenabtastpunkte, und die Trennung richtiger von unrichtigen Kandidatenabtastpunkten anhand der lokalen Abtastpunktedichte verbessert wird.

Das Verfahren zum Erstellen der 3D-Punktwolke kann einem davon unabhängigen Laserscannen der Umgebung nachgeschaltet sein. Um die Sende- und Empfangspulsfolgen im Zuge des Verfahrens aufzunehmen, kann es ferner das Laserscannen der Umgebung mitumfassen, wobei jeder Sendepuls zu einem der Sendezeitpunkte von einem der Sendeorte aus in einer der Senderichtungen auf die Umgebung ausgesandt wird und jeder Empfangspuls als Umgebungsreflexion eines der ausgesandten Sendepulse zu einem der Empfangszeitpunkte empfangen wird.

In weiteren Aspekten schafft die Erfindung eine Vorrichtung zur Datenverarbeitung, umfassend Mittel zur Ausführung des genannten Verfahrens; ein Computerprogramm, umfassend Befehle, die bei der Ausführung des Computerprogramms durch einen Computer diesen veranlassen, das genannte Verfahren auszuführen; und ein computerlesbares Medium, umfassend Befehle, die bei der Ausführung durch einen Computer diesen veranlassen, das genannte Verfahren auszuführen. Bezüglich der Vorteile der erfindungsgemäßen Vorrichtung, des erfindungsgemäßen Computerprogramms, und des erfindungsgemäßen computerlesbaren Mediums wird auf die Vorteile des erfindungsgemäßen Verfahrens verwiesen.

Die Erfindung wird nachstehend anhand von in den beigeschlossenen Zeichnungen dargestellten Ausführungsbeispielen näher erläutert. In den Zeichnungen zeigen:
Fig. 1 ein erfindungsgemäßes Verfahren zum Erstellen einer 3D-Punktwolke von Abtastpunkten in einem Flussdiagramm;
Fig. 2 einen Laserscanner beim Laserscannen einer Umgebung gemäß einem optionalen Vorbereitungsschritt des Verfahrens der Fig. 1 in einer schematischen Ansicht von hinten;
Fig. 3 vom Laserscanner der Fig. 2 beim Laserscannen aufgenommene Sende- und Empfangspulsfolgen, aus denen gemäß dem Verfahren der Fig. 1 die 3D-Punktwolke erstellt wird, in einem Diagramm der Amplituden über der Zeit;
Fig. 4 im Zuge des Verfahrens der Fig. 1 in der 3D-punktwolke für mehrdeutige Empfangspulse aufgestellte Kandidatenabtastpunkte in aufeinanderfolgenden Senderichtungen in einem Ausschnitt der Fig. 2; und
Fig. 5 den Laserscanner der Fig. 2 beim Aussenden mehrerer in unterschiedlichen Winkeln zur Umgebung geneigter Scanfächer in einer schematischen Perspektivansicht.

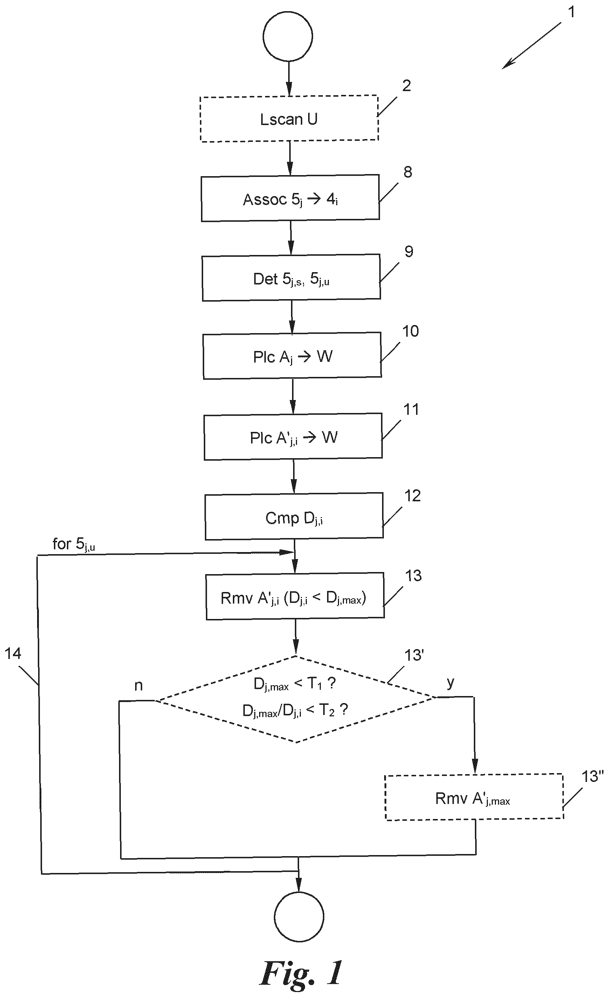

Fig. 1 zeigt ein Verfahren 1 zum Erstellen einer 3D-Punktwolke W von Abtastpunkten Aⱼ, A'_{j,i}, welche eine Umgebung U abbildet.

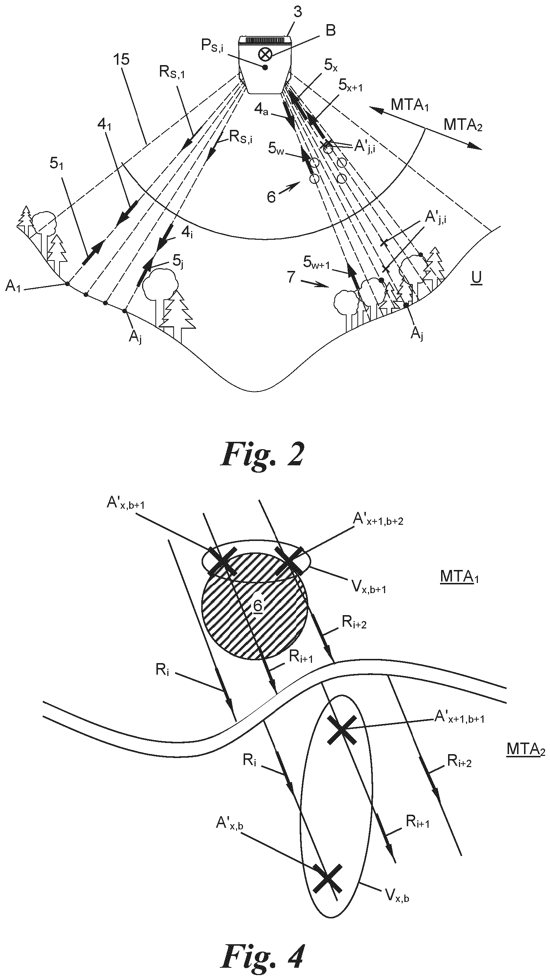

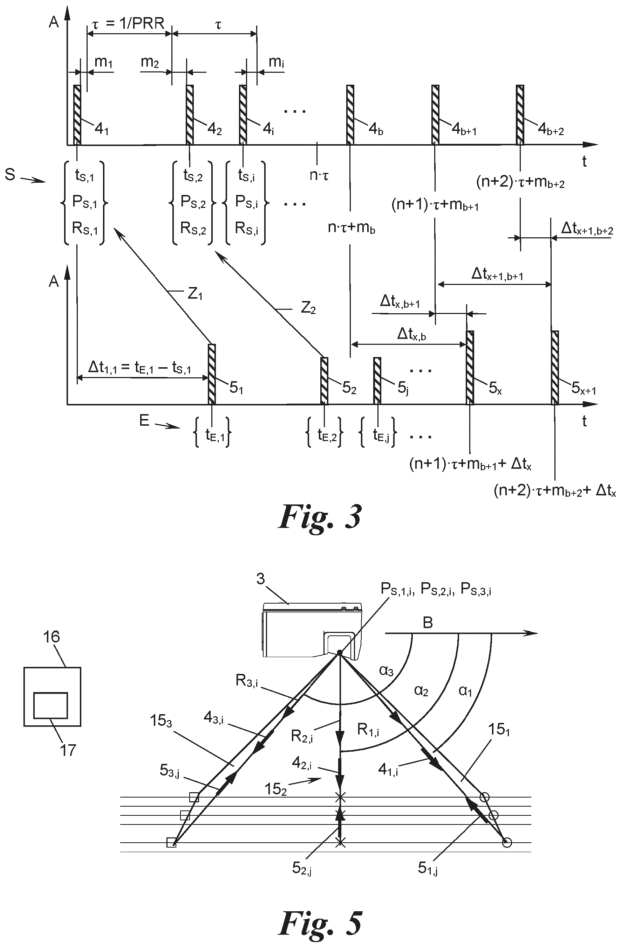

In einem Vorbereitungsschritt 2, der in einer optionalen Ausführungsform Teil des Verfahrens 1 ist, wird die Umgebung U durch Laserscannen mit einem Laserscanner 3 vermessen. Wie in den Fig. 2 und 3 gezeigt, werden dabei vom Laserscanner 3 Sendepulse 4₁, 4₂, ..., allgemein 4ᵢ, auf die Umgebung U ausgesandt, u.zw. jeder Sendepuls 4ᵢ zu einem Sendezeitpunkt t_{S,i} von einem Sendeort P_{S,i} aus in einer Senderichtung R_{S,i}. Der Laserscanner 3 nimmt eine Sendpulsfolge S mit den jeweiligen Sendezeitpunkten t_{S,i}, Sendeorten P_{S,i}, und Senderichtungen R_{S,i} auf. Im Beispiel der Fig. 2 sind die Sendeorte P_{S,i} der Sendepulsfolge S entlang einer Bewegungstrajektorie B angeordnet (hier: in Richtung der dargestellten Sicht) und die Senderichtungen R_{S,i} durchlaufen einen zur Bewegungstrajektorie nicht-parallelen Scanfächer 15, um die Umgebung U mit aufeinanderfolgenden Scanzeilen abzutasten. Alternativ kann der Laserscanner 3 die Umgebung U mit anderen Scanmustern, z.B. in Kreisen, Spiralen, od.dgl. abtasten.

Jeder Sendepuls 4ᵢ kann einmal oder mehrmals an der Umgebung U reflektiert werden. Der Laserscanner 3 empfängt die Reflexionen als Empfangspulse 5₁, 5₂, ... allgemein 5ⱼ, zu einem jeweiligen Empfangszeitpunkt t_{E,j} und nimmt eine Empfangspulsfolge E mit den Empfangszeitpunkten t_{E,j} auf (Fig. 3).

Wie in Fig. 3 gezeigt wird bei hoher Sendepulsrate PRR ("Pulse Repetition Rate") bzw. geringem Sendepulsabstand τ und/oder großer Entfernung zur Umgebung U ein auf einen Sendepuls 4₁ folgender Sendepuls 4₂ bereits ausgesandt, bevor der Empfangspuls 5₁ zum vorherigen Sendepuls 4₁ empfangen wurde. Dadurch entstehen Mehrdeutigkeiten. Z.B. könnte der Empfangspuls 5₁ eine ferne Reflexion des Sendepulses 4₁ sein oder eine nahe Reflexion des Sendepulses 4₂. Dies ist als "multiple time around"-(MTA-)-Problem bekannt. Die maximale Größe dₘₐₓ eines eindeutig vermessbaren Entfernungsbereiches, einer sog. MTA-Zone MTA₁, MTA₂ (Fig. 2) ergibt sich dabei aus der Sendepulsrate PRR und der Lichtgeschwindigkeit c zu dₘₐₓ = c/ (2·PRR) . Die Zuordnung der Empfangspulse 5ⱼ zu den Sendepulsen 4ᵢ wird überdies durch Mehrfachreflexionen erschwert, beispielsweise wird der Sendepuls 4ₐ auf der rechten Seite von Fig. 2 erst an einer Freileitung 6 reflektiert, was zum Empfangspuls 5_{w} führt und dann an einer Baumkrone in einem Wald 7, was zum Empfangspuls 5_{w+1} führt.

Um die Empfangspulse 5ⱼ den Sendepulsen 4ᵢ zuordnen zu können, sind die Sendezeitpunkte t_{s,i} in der Sendepulsfolge S gemäß einer Pulspositionsmodulation variiert (Fig. 3), d.h. ihre Sendepulsrate PRR und damit ihre Sendepulsabstände τ sind mit einem deterministischen oder zufälligen Modulationssignal überlagert. Im gezeigten Beispiel ist dadurch jeder Sendepulszeitpunkt t_{s,i} um einen Modulationswert mᵢ bezüglich eines fiktiven regelmäßigen Sendepulsrasters verschoben.

Zurückkommend auf Fig. 1 wird aus den Sende- und Empfangspulsfolgen S, E in weiteren Schritten 8 - 13 des Verfahrens 1 die 3D-Punktwolke W erstellt.

In einem ersten Schritt 8 des Verfahrens 1 werden die Empfangspulse 5ⱼ in der Empfangspulsfolge E den Sendepulsen 4ᵢ der Sendepulsfolge S zugeordnet. Dazu wird die Variation der Empfangszeitpunkte t_{E,j} mit der Variation der Sendezeitpunkte t_{s,i} gemäß der Pulspositionsmodulation verglichen und die Empfangszeitpunkte t_{E,j} den Sendezeitpunkten t_{s,i} derart zugeordnet, dass die Variationen einander ähneln. Eine Vielzahl an Ähnlichkeitsmetriken kann dazu verwendet werden, z.B. können Folgen von Differenzen aufeinanderfolgender Empfangszeitpunkte t_{E,j} mit Folgen der Differenzen aufeinanderfolgender Sendezeiten t_{S,i} verglichen werden, oder Folgen von Differenzen zwischen Empfangs- und Sendezeitpunkten t_{E,j} - t_{S,i} auf den Einfluss der Pulspositionsmodulation verglichen werden, usw., wie beispielsweise aus dem eingangs zitierten Stand der Technik bekannt.

In einem zweiten Schritt 9 des Verfahrens 1, der gleichzeitig mit dem ersten Schritt 8 oder danach ausgeführt werden kann, werden die Empfangspulse 5ⱼ eingeteilt in sichere Empfangspulse 5_{j,s}, welche mit höherer Sicherheit dem dafür ursächlichen Sendepuls 4ᵢ zugeordnet sind, und unsichere Empfangspulse 5_{j,u}, welche mit geringerer Sicherheit dem dafür ursächlichen Sendepuls 4ᵢ zugeordnet sind. Die Sicherheit kann auf viele Arten berechnet und durch viele Metriken quantifiziert werden bspw. auf Basis eines Vergleichs der Variation der Empfangszeitpunkte t_{E,j} und der Variation der zugeordneten Sendezeitpunkte t_{S,i}, insbesondere auf Basis der Analyse eines zeitlichen Verlaufs der zeitlichen Abstände Δt_{j,i} = t_{E,j} - t_{S,i} zwischen den Empfangs- und jeweils zugeordneten Sendezeitpunkten t_{E,j}, t_{S,i}. Beispielsweise kann ein einzelner Ausreißer-Empfangspuls 5ⱼ, dessen zeitlicher Abstand Δt_{j,i} zum jeweils zugeordneten Sendepuls 4ᵢ sich von zeitlichen Abständen Δt_{j±m,i}, welche Nachbar-Empfangspulse 5_{j±m} zu ihren zugeordneten Sendepulsen 4ᵢ haben, um einen vorgegebenen additiven oder multiplikativen Schwellwert unterscheidet, als unsicherer Empfangspuls 5_{j,u} bestimmt werden. Gleichfalls kann zumindest eine Gruppe aufeinanderfolgender Ausreißer-Empfangspulse 5ⱼ mit jeweils abweichendem zeitlichen Abstand Δt_{j,i} zu den der Gruppe benachbarten Empfangspulsen 5ⱼ als unsichere Empfangspulse 5_{j,u} bestimmt werden. In einem weiteren Beispiel kann zumindest eine Gruppe von Empfangspulsen 5ⱼ ermittelt werden, deren zugeordnete Sendepulse 4ᵢ unter ähnlichen, d.h. innerhalb eines jeweiligen Winkelbereichs liegenden, Senderichtungen R_{S,i} ausgesandt wurden, z.B. Sendepulse 4ᵢ innerhalb einer und/oder benachbarter Scanzeilen anhand ähnlicher Indices. Daraufhin können die zeitlichen Abstände Δt_{j,i} innerhalb dieser Gruppe untersucht werden, um anhand großer Abweichungen unsichere Ausreißer-Empfangspulse 5_{j,u} zu bestimmen.

Im Beispiel der Fig. 2 und 3 folgen die Empfangspulse 5ⱼ auf der linken Seite von Fig. 2 der Pulspositionsmodulation streng und die Variation der Empfangszeitpulse t_{E,j} ähnelt der Variation der Sendezeitpunkte t_{S,i}, da alle Messentfernungen innerhalb derselben MTA-Zone MTA₂ und nahe beieinander liegen. Daher werden die Empfangspulse 5ⱼ der linken Seite allesamt mit hoher Sicherheit einem Sendepuls 4ᵢ zugeordnet (siehe Zuordnungspfeile Z₁, Z₂, ... allgemein Zⱼ in Fig. 3) und als sichere Empfangspulse 5_{j,s} bestimmt. Die Empfangspulse 5ⱼ auf der rechten Seite von Fig. 2 hingegen folgen der Pulspositionsmodulation weniger streng und die Variation der Empfangszeitpulse t_{E,j} ähnelt der Variation der Sendezeitpunkte t_{S,i} weniger, da die Messentfernungen für die Freileitung 6 und den Wald 7 innerhalb mehrerer MTA-Zonen MTA₁, MTA₂ und verstreut liegen. Daher werden die meisten der Empfangspulse 5ⱼ der rechten Seite nur mit geringer Sicherheit einem Sendepuls 4ᵢ zugeordnet und als unsichere Empfangspulse 5_{j,u} bestimmt.

Unter Bezugnahme auf die Fig. 1 und 3 wird in einem dritten Schritt 10 des Verfahrens 1 für jeden sicheren Empfangspuls 5_{j,s} ein Abtastpunkt Aⱼ in der 3D-Punktwolke W aufgestellt, d.h. die 3D-Punktwolke W für die sicheren Empfangspulse 5_{j,s} erstellt. In Fig. 2 sind diese "sicheren" Abtastpunkte Aⱼ mit Punkten dargestellt. Dazu wird ein zeitlicher Abstand Δt_{j,i} zwischen dem Sendezeitpunkt t_{S,i} des dem sicheren Empfangspuls 5_{j,s} zugeordneten Sendepulses 4ᵢ und dem Empfangszeitpunkt t_{E,j}, d.h. die Pulslaufzeit, ermittelt und daraus die Entfernung zwischen dem jeweiligen Sendeort P_{S,i} und der Umgebung U. In Kenntnis der Entfernung, des jeweiligen Sendeorts P_{S,i} und der jeweiligen Senderichtung R_{S,i} wird der Abtastpunkt Aⱼ in der 3D-Punktwolke W aufgestellt.

In einem vierten Schritt 11 des Verfahrens 1 werden für jeden unsicheren Empfangspuls 5_{j,u} mehrere Kandidatenabtastpunkte A'_{j,i} in der 3D-Punktwolke W aufgestellt.

In den Fig. 2 und 4 sind die Kandidatenabtastpunkte A'_{j,i} mit Kreuzen dargestellt. Jeder Kandidatenabtastpunkt A'_{j,i} eines unsicheren Empfangspulses 5_{j,u} wird aus seinem Empfangszeitpunkt t_{E,j} und dem Sendezeitpunkt t_{S,i}, dem Sendeort P_{S,i} und der Senderichtung R_{S,i} eines zugehörigen Sendepulses 4ᵢ aufgestellt, welcher aufgrund seines zeitlichen Abstands Δt_{i,j} möglicherweise für den unsicheren Empfangspuls 5_{j,u} ursächlich war.

Die Fig. 2 - 4 veranschaulichen das Aufstellen für zwei beispielhafte an der Freileitung 6 reflektierte Empfangspulse 5ₓ, 5ₓ₊₁, welche als unsicher bestimmt wurden. Der erste beispielhafte Empfangspuls 5ₓ hätte als Fernreflexion des Sendepulses 4_{b} einen zeitlichen Abstand Δt_{x,b} = t_{E,x} - t_{S,b} = τ + Δtₓ + m_{b+1} - m_{b} (Fig. 3) und wird daher als Kandidatenabtastpunkt A'_{x,b} in der zweiten MTA-Zone MTA₂ aufgestellt (Fig. 2 und 4). Als Nahreflexion des Sendepulses 4_{b+1} hätte er einen zeitlichen Abstand Δt_{x,b+1} = t_{E,x} - t_{S,b+1} = Δtₓ (Fig. 3), wobei Δtₓ die tatsächliche Pulslaufzeit des Empfangspulses 5ₓ bezeichnet, und wird als Kandidatenabtastpunkt A'_{x,b+1} in der ersten MTA-Zone MTA₁ auf der Freileitung 6 aufgestellt (Fig. 2 und 4). Es versteht sich, dass zunächst noch unsicher ist, welcher der beiden Kandidatenabtastpunkte A'_{x,b}, A'_{x,b+1} "richtig" ist. Ähnlich dazu hätte der zweite beispielhafte Empfangspuls 5ₓ₊₁ als Fernreflexion des Sendepulses 4_{b+1} einen zeitlichen Abstand Δt_{x+1,b+1} = t_{E,x+1} - t_{S,b+1} = τ + Δtₓ₊₁ + m_{b+2} - m_{b+1} (Fig. 3) und wird daher als Kandidatenabtastpunkt A'_{x+1,b+1} in der zweiten MTA-Zone MTA₂ aufgestellt (Fig. 2 und 4). Als Nahreflexion des Sendepulses 4_{b+2} hätte er einen zeitlichen Abstand Δt_{x+1,b+2} = t_{E,x+1} - t_{S,b+2} = Δtₓ₊₁ (Fig. 3), wobei Δtₓ₊₁ die tatsächliche Pulslaufzeit des Empfangspulses 5ₓ bezeichnet, und wird daher als Kandidatenabtastpunkt A'_{x+1,b+2} in der ersten MTA-Zone MTA₁ auf der Freileitung 6 aufgestellt (Fig. 2 und 4).

Wie aus den Fig. 3 und 4 und den obigen Formeln ersichtlich ist, sind die "richtigen" zeitlichen Abstände Δt_{x,b+1}, Δt_{x+1,b+2} (zu für die Empfangspulse 5ₓ, 5ₓ₊₁ ursächlichen Sendepulsen S_{b+1}, S_{b+2}) für die "richtigen" Kandidatenabtastpunkte A'_{x,b+1}, A'_{x+1,b+2} nicht durch die Pulspositionsmodulation verschoben (deren Einfluss kürzt sich bei der Differenzbildung zwischen "richtigen" Empfangs- und Sendezeitpunkten heraus), sodass die Kandidatenabtastpunkte A'_{x,b+1}, A'_{x+1,b+2} in der 3D-Punktwolke W nahe beieinanderliegen. Dagegen sind die "unrichtigen" zeitlichen Abstände Δt_{x,b}, Δt_{x+1,b+1} (zu nicht ursächlichen Sendepulsen S_{b}, S_{b+1}) für die "unrichtigen" Kandidatenabtastpunkte A'_{x,b}, A'_{x+1,b+1} durch die Pulspositionsmodulation verschoben (deren Einfluss verbleibt bei der Differenzbildung zwischen "unrichtigen" Empfangs- und Sendezeitpunkten), sodass die Kandidatenabtastpunkte A'_{x,b}, A'_{x+1,b+1} in der Punktwolke W weiter auseinanderliegen. Richtige Kandidatenabtastpunkte A'_{j,i} bilden daher Cluster, während unrichtige Kandidatenabtastpunkte A'_{j,i} im Raum verstreut sind. Es versteht sich, dass die richtigen Kandidatenabtastpunkte A'_{j,i} mehrerer an demselben Ausschnitt der Umgebung U (z.B. an der Freileitung 6) reflektierter Empfangspulse 5ⱼ räumlich nahe beieinander liegen, selbst wenn sie zeitlich weit auseinander liegen, z.B. wenn mehr als zehn, hundert oder tausend Empfangspulse 5ⱼ dazwischenliegen, beispielsweise weil die Empfangspulse 5ⱼ aus mehreren verschiedenen Scanfächerdurchläufen bzw. Scanzeilen stammen.

Gemäß Fig. 1 werden ein fünfter Schritt 12 und ein sechster Schritt 13 des Verfahrens 1 in einer Schleife 14 über alle unsicheren Empfangspulse 5_{j,u} wiederholt ausgeführt: Im fünften Schritt 12 des Verfahrens 1 wird an jedem Kandidatenabtastpunkt A'_{j,i} des gerade in der Schleife 14 behandelten unsicheren Empfangspulses 5_{j,u} die lokale Abtastpunktedichte D_{j,i} berechnet. Die lokale Abtastpunktedichte D_{j,i} ist ein Maß dafür, wie dicht die Abtastpunkte Aⱼ und/oder Kandidatenabtastpunkte A'_{j,i} in der Nachbarschaft des jeweiligen Kandidatenabtastpunkts A'_{j,i} liegen, und kann auf verschiedene Arten berechnet werden, z.B. durch Zählen der Kandidatenabtastpunkte A'_{j,i} und/oder der Abtastpunkte Aⱼ innerhalb eines den jeweiligen Kandidatenabtastpunkt A'_{j,i} umgebenden festen Volumens. In einer in den Fig. 2 und 4 illustrierten Variante wird die lokale Abtastpunktedichte D_{j,i} in der 3D-Punktwolke W anhand eines Volumens V_{j,i} (hier: V_{x,b+1}) berechnet, das eine vorgegebene Anzahl N an nächsten Abtastpunkten Aⱼ und Kandidatenabtastpunkten A'_{j,i} aufspannen, z.B. als N / V_{j,i} oder 1 / V_{j,i}. Die Anzahl N kann je nach Auflösung der 3D-Punktwolke W z.B. größer als 3, größer als 5, größer als 10, größer als 20, usw. sein.

Im sechsten Schritt 13 des Verfahrens 1 wird jeder Kandidatenpunkt A'_{j,i} des gerade in der Schleife 14 durchlaufenen unsicheren Empfangspulses 5_{j,u} aus der 3D-Punktwolke W entfernt, dessen berechnete lokale Abtastpunktedichte D_{j,i} geringer ist als die an den Kandidatenabtastpunkten A'_{j,i} dieses gerade durchlaufenen unsicheren Empfangspulses 5_{j,u} größte berechnete lokale Abtastpunktedichte D_{j,max}. Im Beispiel der Fig. 2 und 4 weisen aufgrund des oben beschriebenen Einflusses der Pulspositionsmodulation die richtigen Kandidatenabtastpunkte A'_{x,b+1} und A'_{x+1,b+2} auf der Freileitung 6 jeweils eine hohe lokale Abtastpunktedichte D_{x,b+1} und D_{x+1,b+2} (d.h. ihre nächsten Abtastpunkte spannen ein geringes Volumen auf), die unsicheren Kandidatenabtastpunkte A'_{x,b} und A'_{x+1,b+1} in der zweiten MTA-Zone MTA₂ aufgrund des beschriebenen Versatzes hingegen jeweils eine niedrige lokale Abtastpunktedichte D_{x,b} und D_{x+1,b+1} (d.h. ihre nächsten Abtastpunkte spannen ein großes Volumen auf). Daher weist für den ersten beispielhaften Empfangspuls 5ₓ der Kandidatenabtastpunkt A'_{x,b+1} die höchste Abtastpunktedichte D_{x,max} auf und der Kandidatenabtastpunkt A'_{x,b} wird entfernt. Ebenso weist für den zweiten beispielhaften Empfangspuls 5ₓ₊₁ der Kandidatenabtastpunkt A'_{x+1,b+2} die höchste lokale Abtastpunktedichte D_{x+1,max} auf und der Kandidatenabtastpunkt A'_{x+1,b+1} wird entfernt.

Im Ergebnis wird durch die Schritte 8 - 13 aus den Sende- und Empfangspulsfolgen S, E die 3D-Punktwolke W mit Abtastpunkten Aⱼ und richtigen Kandidatenabtastpunkten A'_{j,i} erstellt und so z.B. die Freileitung 6 korrekt in der 3D-Punktwolke W abgebildet.

Optional kann in einem Teilschritt 13' des sechsten Schritts 13 überprüft werden, ob die berechnete lokale Abtastpunktedichte D_{j,max} sich von den anderen berechneten lokalen Abtastpunktedichten D_{j,i} eines unsicheren Empfangspulses 5_{j,u} um weniger als einen vorgegebenen, z.B. additiven oder multiplikativen Wert T₁ unterscheidet und/oder geringer ist als ein vorgegebener Schwellwert T₂ der lokalen Abtastpunktedichte. Falls dem so ist, kann in einem weiteren Teilschritt 13" des sechsten Schritts 13 zusätzlich jener Kandidatenabtastpunkt A'_{j,i} mit der - relativ - größten berechneten lokalen Abtastpunktedichte D_{j,i} für den gerade durchlaufenen unsicheren Empfangspuls 5_{j,u} aus der 3D-Punktwolke W entfernt werden, da dieser zu wenig aussagekräftig und/oder immer noch - absolut - zu gering ist.

Das Verfahren 1 kann noch weitere Sende- und zugehörige Empfangspulsfolgen S₂, E₂, S₃, E₃, ..., allgemein Sₖ, Eₖ, zum Erstellen der 3D-Punktwolke P verwenden, z.B. Sende- und Empfangspulsfolgen Sₖ, Eₖ mit verschiedenen Sendezeitpunkten t_{s,k,i}, z.B. mit verschiedenen Senderaten PRRₖ, mit verschiedenen Senderichtungen R_{S,k,i}, z.B. auf die gleichen Ausschnitte der Umgebung U unter verschiedenem Winkel gerichteten Senderichtungen R_{S,k,i}, und/oder mit verschiedenen Sendeorten P_{S,k,i}, z.B. für verschiedene Bewegungstrajektorien B. Dazu werden in Schritt 8 die Empfangspulse 5_{k,j} jeder Empfangspulsfolge Eₖ den Sendepulsen 4_{k,i} der zugehörigen Sendepulsfolge Sₖ zugeordnet, in Schritt 9 die jeweils sicheren und unsicheren Empfangspulse 5_{k,j,s}, 5_{k,j,u} der Empfangspulsfolgen Eₖ bestimmt, in Schritt 10 Abtastpunkte Aⱼ für alle sicheren Empfangspulse 5_{k,j,s} aufgestellt, in Schritt 11 Kandidatenabtastpunkte A'_{j,i} für alle unsicheren Empfangspulse 5_{k,j,u} aufgestellt, in Schritt 12 lokale Abtastpunktedichten D_{j,i} an allen Kandidatenabtastpunkten A'_{j,i} berechnet und in Schritt 13 (optional inklusive der Teilschritte 13' und 13") unrichtige Kandidatenabtastpunkte A'_{j,i} entfernt.

Fig. 5 zeigt eine Variante des Laserscanners 3 beim Aufzeichnen von zwei oder mehr (hier: drei) Sende- und Empfangspulsfolgen E₁, S₁, E₂, S₂, E₃, S₃ mit beispielhaften Sende- und Empfangspulsen 4_{1,i}, 5_{1,j} der ersten Sende- und Empfangspulsfolgen E₁, S₁, Sende- und Empfangspulsen 4_{2,i}, 5_{2,j} der zweiten Sende- und Empfangspulsfolgen E₂, S₂, und Sende- und Empfangspulsen 4_{3,i}, 5_{3,j} der dritten Sende- und Empfangspulsfolgen E₃, S₃. Der Laserscanner 3 wird, z.B. auf einem Land-, Luft-, oder Wasserfahrzeug mitgeführt, und entlang der (hier: optional linearen) Bewegungstrajektorie B bewegt und mit ihm die Sendeorte P_{S,1,i}, P_{S,2,i}, P_{S,3,i} in jeder Sendepulsfolge S₁, S₂, S₃. Die Senderichtungen R_{S,1,i} der ersten Sendepulsfolge S₁ durchlaufen - in der Regel wiederholt - einen zur Bewegungstrajektorie nicht-parallelen Scanfächer 15₁, die Senderichtungen R_{S,2,i}, R_{S,3,i} der zweiten und dritten Sendepulsfolgen S₂, S₃ jeweils einen weiteren zur Bewegungsrichtung nicht-parallelen Scanfächer 15₂, 15₃. Die Scanfächer 15₁, 15₂, 15₃ sind normal zur Bewegungsrichtung B gesehen in Richtung der Umgebung U unter unterschiedlichen Winkeln α₁, α₂, α₃ geneigt und überlappen sich alle in Richtung der Bewegungstrajektorie B gesehen. Dadurch werden Ausschnitte der Umgebung U im Zuge der Laserscannerbewegung von gleich mehreren Scanfächern 15₁, 15₂, 15₃ erfasst.

Wie in Fig. 5 gezeigt können die vom Laserscanner 3 erfassten Sende- und Empfangspulsfolgen S, E bzw. Sₖ, Eₖ in eine Vorrichtung 16 zur Datenverarbeitung eingespeist werden, welche Mittel zur Ausführung der Schritte 8 - 13 (optional inklusive 13' und 13") aufweist. Die Vorrichtung 16 kann dazu ein Computerprogramm ausführen, welches Befehle umfasst, die bei der Ausführung des Computerprogramms durch die Vorrichtung 16 diese veranlassen, das Verfahren 1 auszuführen. Im gezeigten Beispiel ist ein solches Computerprogramm auf einem computerlesbaren Medium 17 gespeichert.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verfahren zum Erstellen einer 3D-Punktwolke (W) von Abtastpunkten (Aⱼ, A'_{j,i}), welche eine Umgebung (U) abbildet, aus einer Sendepulsfolge (S) mit jeweiligen Sendezeitpunkten (t_{S,i}), Sendeorten (P_{S,i}) und Senderichtungen (R_{S,i}) von auf die Umgebung (U) ausgesandten Sendepulsen (4ᵢ), und einer Empfangspulsfolge (E) mit jeweiligen Empfangszeitpunkten (t_{E,j}) von an der Umgebung (U) reflektierten Empfangspulsen (5ⱼ), wobei die Sendezeitpunkte (t_{S,i})in der Sendepulsfolge (S) entsprechend einer Pulspositionsmodulation variiert sind, umfassend:
Zuordnen (8) der Empfangspulse (5ⱼ) in der Empfangspulsfolge (E) zu den Sendepulsen (4ᵢ) in der Sendepulsfolge (S) anhand einer Ähnlichkeit der Variation der Empfangszeitpunkte (t_{E,j}) zur Variation der Sendezeitpunkte (t_{S,i})gemäß der Pulspositionsmodulation und Bestimmen (9) sicherer Empfangspulse (5_{j,s}), welche mit höherer Sicherheit dem dafür ursächlichen Sendepuls (4ᵢ) zugeordnet sind, und unsicherer Empfangspulse (5_{j,u}), welche mit geringerer Sicherheit dem dafür ursächlichen Sendepuls (4ᵢ) zugeordnet sind;
Aufstellen (10) eines Abtastpunkts (Aⱼ) in der 3D-Punktwolke (W) für jeden sicheren Empfangspuls (5_{j,s})aus dem Empfangszeitpunkt (t_{E,j}) des sicheren Empfangspulses (5_{j,s})und dem Sendezeitpunkt (t_{S,i}), dem Sendeort (P_{S,i}) und der Senderichtung (R_{S,i}) des zugeordneten Sendepulses (4ᵢ);
Aufstellen (11) mehrerer Kandidatenabtastpunkte (A'_{j,i}) in der 3D-Punktwolke (W) für jeden unsicheren Empfangspuls (5_{j,u}) aus dem Empfangszeitpunkt (t_{E,j}) des unsicheren Empfangspulses (5_{j,u})und dem Sendezeitpunkt (t_{S,i}), dem Sendeort (P_{S,i}) und der Senderichtung (R_{S,i}) jeweils eines aufgrund seines zeitlichen Abstands zum unsicheren Empfangszeitpunkt (5_{j,u})möglicherweise ursächlichen Sendepulses (4ᵢ);
für jeden unsicheren Empfangspuls (5_{j,u}), Berechnen (12) einer lokalen Abtastpunktedichte (D_{j,i}) in der 3D-Punktwolke (W) an jedem seiner Kandidatenabtastpunkte (A'_{j,i}), und Entfernen (13) jener seiner Kandidatenabtastpunkte (A'_{j,i}) aus der 3D-Punktwolke (W), deren berechnete lokale Abtastpunktedichte (D_{j,i}) geringer ist als die an seinen Kandidatenabtastpunkten (A'_{j,i}) größte berechnete lokale Abtastpunktedichte (D_{j,max}).

2. Verfahren nach Anspruch 1, wobei im Schritt des Entfernens (13) auch der Kandidatenabtastpunkt (A'_{j,i}) des jeweiligen Empfangspulses (5ⱼ) mit der größten berechneten lokalen Abtastpunktedichte (D_{j,max})aus der 3D-Punktwolke (W) entfernt wird, wenn die berechnete lokale Abtastpunktedichte (D_{j,max}) sich von den anderen berechneten lokalen Abtastpunktedichten (D_{j,i}) um weniger als einen vorgegebenen Wert (T₁) unterscheidet und/oder geringer ist als ein vorgegebener Schwellwert (T₂).

3. Verfahren nach Anspruch 1 oder 2, wobei die lokale Abtastpunktedichte (D_{j,i}) in der 3D-Punktwolke (W) für jeden Kandidatenabtastpunkt (A'_{j,i}) anhand eines Volumens (V_{x,b+1}, V_{x+1,b+2}) berechnet wird, das einer vorgegebenen Anzahl an nächsten Abtastpunkten (Aⱼ) und Kandidatenabtastpunkten (A'_{j,i}) zugeordnet ist.

4. Verfahren nach einem der Ansprüche 1 bis 3, wobei weitere Sende- und Empfangspulsfolgen zum Erstellen der 3D-Punktwolke (W) verwendet werden, und wobei die Sendeorte (P_{S,1,i}, P_{S,2,i}, P_{S,3,i}) jeder Sendepulsfolge entlang einer Bewegungstrajektorie (B) angeordnet sind, die Senderichtungen (R_{S,1,i}, R_{S,2,i}, R_{S,3,i}) in jeder Sendepulsfolge einen zur Bewegungstrajektorie (B) nicht-parallelen jeweiligen Scanfächer (15₁, 15₂, 15₃) durchlaufen, alle Scanfächer (15₁, 15₂, 15₃) einander in Richtung der Bewegungstrajektorie (B) gesehen zumindest teilweise überlappen und normal zur Bewegungstrajektorie (B) in Richtung der Umgebung (U) verschieden geneigt sind.

5. Verfahren nach einem der Ansprüche 1 bis 4, ferner umfassend Laserscannen (2) der Umgebung (U), um die Sende- und Empfangspulsfolge/n (E, S) aufzunehmen, wobei jeder Sendepuls (4ᵢ) zu einem der Sendezeitpunkte (t_{S,i})von einem der Sendeorte (P_{S,i}) aus in einer der Senderichtungen (R_{S,i}) auf die Umgebung (U) ausgesandt wird und jeder Empfangspuls (5ⱼ) als Umgebungsreflexion eines der ausgesandten Sendepulse (4₁) zu einem der Empfangszeitpunkte (t_{E,j}) empfangen wird.

6. Vorrichtung zur Datenverarbeitung, umfassend Mittel zur Ausführung des Verfahrens (1) nach einem der Ansprüche 1 bis 4.

7. Computerprogramm, umfassend Befehle, die bei der Ausführung des Computerprogramms durch einen Computer diesen veranlassen, das Verfahren (1) nach einem der Ansprüche 1 bis 4 auszuführen.

8. Computerlesbares Medium, umfassend Befehle, die bei der Ausführung durch einen Computer diesen veranlassen, das Verfahren (1) nach einem der Ansprüche 1 bis 4 auszuführen.
